# EUROPÄISCHE PATENTSCHRIFT

(11) **EP 2 435 741 B1**
(45) Veröffentlichungstag und Bekanntmachung des Hinweises auf die Patenterteilung: **22.11.2017**
(21) Anmeldenummer: 10717133.2
(22) Anmeldetag: 29.04.2010
(51) Int. Cl.: F16K 99/00

(54) **VENTIL FÜR LAB-ON-A-CHIP-SYSTEME**
VALVE FOR LAB-ON-A-CHIP SYSTEMS
VANNE POUR SYSTÈMES DE LABORATOIRE SUR PUCE

(30) Priorität: 29.05.2009 DE 102009023429
(43) Veröffentlichungstag der Anmeldung: 04.04.2012
(73) Patentinhaber: Boehringer Ingelheim Vetmedica GmbH, 55216 Ingelheim am Rhein (DE)
(72) Erfinder: GUMBRECHT, Walter, 91074 Herzogenaurach (DE); FRIEDRICH, Katja, 90425 Nürnberg (DE); PAULICKA, Peter, 91341 Röttenbach (DE)
(74) Vertreter: Von Rohr Patentanwälte Partnerschaft mbB
(86) Internationale Anmeldenummer: PCT/EP2010/055822
(87) Internationale Veröffentlichungsnummer: WO 2010/136299

(56) Entgegenhaltungen:
- EP-A1- 1 905 514
- WO-A1-2006/132666
- WO-A1-2010/031559
- DE-A1- 19 949 912
- US-A1- 2002 166 585
- US-A1- 2009 007 969

## Beschreibung

Die vorliegende Erfindung bezieht sich auf ein Ventil zum Öffnen und Schließen eines Durchflusskanals in einem Lab-ona-Chip-System mit einem Trägerkörper, welcher wenigstens eine erste Aussparung in Form eines Durchflusskanals aufweist und direkt benachbart zu einem Teilbereich der ersten Aussparung eine zweite Aussparung aufweist, wie es beispielsweise aus der EP 0 180 064 B1 bekannt ist.

In der Biosensorik werden Lab-on-a-Chip-Systeme eingesetzt, um parallel biochemische Analysen durchführen zu können. Auf einem Träger, welcher zum Beispiel aus einer Plastikkarte besteht, sind mikrofluidische Einrichtungen und ein Chip mit einem Array von Sensoren integriert. Das Array von Sensoren besteht zum Beispiel aus elektrochemischen Sensoren, welche in Spalten und Zeilen auf dem Chip angeordnet sind. Die Sensoren sind mit Molekülen beschichtet, an welchen die nachzuweisenden Substanzen spezifisch binden. Das spezifische Binden wird elektrochemisch über Änderungen von Strom und/oder Spannung nachgewiesen. Damit lassen sich in zu untersuchenden Lösungen, wie zum Beispiel Blut oder Urin, biochemische Substanzen nachweisen, wie zum Beispiel Antikörper, Peptide oder DNA.

Die gemessenen elektrochemischen Signale können durch integrierte Schaltungen auf dem Chip direkt verarbeitet werden, oder sie können über eine externe Auswerteeinheit aus dem Chip ausgelesen werden. Die für die Untersuchung notwendigen Chemikalien können von der externen Auswerteeinheit dem Träger zugeführt werden oder sich auf dem Träger, zum Beispiel in Form von Trockenreagenzien, schon befinden. Bei der Untersuchung werden die Lösungen, d.h. Flüssigkeiten, dem Träger zugeführt und auf dem Träger über Mikrokanäle in eine Reaktionskammer geleitet. In der Reaktionskammer befindet sich der Chip mit dem Sensor Array. Für den Nachweis notwendige Reaktionen können in den Mikrokanälen und/oder der Reaktionskammer stattfinden.

Bei komplexen biochemischen Reaktionen, welche für den Nachweis notwendig sind, muss der Flüssigkeitsstrom der Lösung kontrolliert werden. So kann es notwendig sein, dass in einem Bereich der Mikrokanäle die Flüssigkeit für einen vorbestimmten Zeitraum gestaut wird, damit zum Beispiel Trockenreagenzien, welche in diesem Bereich gelagert sind, gelöst werden und chemische Reaktionen stattfinden. Erst nach Vollendung der chemischen Reaktionen wird die Flüssigkeit in dem Mikrokanal weitergeleitet. Des Weiteren kann es notwendig sein, beim Nachweis der biochemischen Substanzen in der Reaktionskammer die Reaktionskammer flüssigkeitsdicht zu verschließen. Zu diesem Zweck sind im Träger Ventile vorzusehen. Diese sind an bestimmten ausgewählten Stellen, wie z.B. im Zu- und Abfluss der Reaktionskammer, im Träger anzuordnen.

Aus der EP 0 180 064 B1 sind Ventile bekannt, welche ausgebildete sind, Mikrokanäle zu verschließen. Die Mikrokanäle sind in einem ersten Träger angeordnet, welcher auf der Seite der Mikrokanäle mit einer dünnen Membran abgedeckt ist. Die dünne Membran ist sandwichmäßig zwischen dem ersten Träger und einem zweiten Träger angeordnet. In dem zweiten Träger sind stempelähnliche Einrichtungen angeordnet, welche mit Hilfe von Federn über die Membran auf Öffnungen der Mikrokanäle in dem ersten Träger gepresst werden können. Dabei werden die Mikrokanäle durch die Membran verschlossen. Die beschriebenen Ventile weisen eine Reihe von Einzelteilen auf und sind nur durch ein System von wenigstens zwei Trägern und einer Membran auszubilden. Die Vielzahl von Teilen führt zu Problemen in der Zuverlässigkeit und Dichtheit dieser Ventile. Außerdem führt der Aufbau aus wenigstens zwei Trägern zu hohen Herstellungskosten und zu einer aufwändigen Justierung der stempelähnlichen Einrichtungen im zweiten Träger über den Öffnungen der Mikrokanäle des ersten Trägers.

Die US 2009/0007969 A1 zeigt eine Anordnung mit einem mikrofluidischen Kanal und einer deformierbaren Masse. Der Kanal wird mittels der Masse unter Druckeinwirkung vollständig ausgefüllt, um ein dichtendes Verschließen des Kanals zu ermöglichen.

Die EP 1 905 514 A1 offenbart eine Vorrichtung mit einem Ventil, das zum Öffnen und Schließen eines rohrförmigen Kanals ausgebildet ist. Eine erste Wand des Kanals ist aus einem Elastomermaterial hergestellt, wobei eine zweite Wand aus einem thermoplastischen Material gebildet ist. Der Kanal ist bei Druckeinwirkung auf die erste Wand verschließbar, wobei in diesem Fall die erste Wand dichtend auf der zweiten Wand aufliegt.

Aufgabe der vorliegenden Erfindung ist es ein Ventil anzugeben, wobei eine sichere Anordnung der Elastomermasse am Trägerkörper ermöglicht wird.

Die angegebene Aufgabe wird durch ein Ventil gemäß Anspruch 1 gelöst. Vorteilhafte Weiterbildungen sind Gegenstand der Unteransprüche.

Vorteilhafte Ausgestaltungen des erfindungsgemäßen Ventils zum Öffnen und Schließen eines Durchflusskanals in einem Lab-on-a-Chip-System gehen aus den jeweils zugeordneten abhängigen Unteransprüchen hervor. Dabei können die Merkmale des Hauptanspruchs mit Merkmalen der Unteransprüche und Merkmale der Unteransprüche unterein- ander kombiniert werden.

Das erfindungsgemäße Ventil zum Öffnen und Schließen eines Durchflusskanals in einem Lab-on-a-Chip-System umfasst einen Trägerkörper, welcher wenigstens eine erste Aussparung in Form eines Durchflusskanals aufweist und welcher direkt be-nachbart zu einem Teilbereich der ersten Aussparung eine zweite Aussparung aufweist.

Die zweite Aussparung ist zumindest teilweise mit einem Elastomer bzw. einer Elastomermasse, welche einen Elastomerkörper bildet, befüllt. In einem ersten Zustand bilden die Elastomermasse und der Trägerkörper in dem einen Teilbereich der ersten Aussparung gemeinsam Begren- zungsflächen des Durchflusskanals aus. In einem zweiten Zustand ist unter Druckeinwirkung die Elastomermasse derart verformt, dass in der ersten Aussparung ein Querschnitt des Durchflusskanals insbesondere vollständig ausgefüllt ist. Der Durchflusskanal ist in dem zweiten Zustand verschlossen.

Der Aufbau des erfindungsgemäßen Ventils umfasst im einfachsten Fall nur zwei Körper, den ersten Trägerkörper und die Elastomermasse. Dieser einfache Aufbau führt zu einer zuverlässigen Funktionsweise und einer kostengünstigen Herstellung. Durch Druck auf die Elastomermasse kann das Ventil reversibel verschlossen werden und durch Aufhebung des Drucks wieder geöffnet werden. Der Aufbau des Ventils enthält keine Verschleißteile, was zu einer zuverlässigen Funktionsweise über längere Zeit auch bei häufiger Benutzung führt.

Der Trägerkörper kann aus einem verhältnismäßig harten Plastikmaterial wie insbesondere Polycarbonat oder Polypropylen bestehen. Das Elastomer bzw. die Elastomermasse kann aus einem thermoplastischen Elastomer, insbesondere Gummi oder einem Gemisch aus Polypropylen und Ethylen-Propylen-Dien M-Klass-Elastomer (Santoprene®) ausgebildet sein. Dadurch sind der Trägerkörper und die Elastomermasse weitgehend chemisch stabil gegenüber Substanzen, welche bei biochemischen Analysen eingesetzt werden. Die biochemischen Analysen werden nicht durch diese Stoffe verfälscht, da sie in der Regel nicht mit den biochemischen Substanzen reagieren. Sie sind im Gegensatz zu Metallen enert gegenüber Lösungsmitteln wie Wasser oder Alkoholen, und verändern biochemische Substanzen wie z.B. Peptide, DNA oder Antikörper nicht.

Die erste und zweite Aussparung und somit der Durchflusskanal sind mit Hilfe einer Folie, insbesondere einer selbstklebenden Folie, flüssigkeitsdicht und/oder gasdicht abgedeckt. Dies ermöglicht eine besonders einfache Herstellung der Ventile und z.B. Trockenreagenzien können einfach in die Durchflusskanäle nach deren Herstellung eingebracht werden. Das Aufbringen der selbstklebenden Folie ist ein einfacher und kostengünstiger Arbeitsschritt und führt zu einer vollständigen Abdichtung gegenüber der Umgebung der Durchflusskanäle und Reaktionskammern im Trägerkörper. Verschmutzungen oder das Aufheben der Sterilität der Ausnehmungen im Trägerkörper bei der Lagerung und beim Transport vor der Benutzung werden verhindert.

Eine besonders einfache und standardisierbare Form des Trägerkörpers ist die Form einer flachen Chip-Karte. Eine Reihe von Laborgeräten können Chipkarten als Lab-on-a-Chip-Systeme verwenden und auslesen.

Ein besonders einfach herzustellendes und zu verwendendes Lab-on-a-Chip-System ist durch eine Chip-Karte gegeben, welche auf einer Vorderseite die erste und zweite Aussparung aufweist, wobei diese zur Vorderseite hin offen sind, und auf dieser Vorderseite vollständig flüssigkeitsdicht und/oder gasdicht mit einer Folie, insbesondere einer selbstklebenden Folie, bedeckt ist. Dies kombiniert die zuvor beschriebenen Vorteile der Chip-Karte und der Folienabdichtung einer Vorderseite mit Ausnehmungen wie Reaktionskammern und Durchflusskanälen.

Die erste und/oder zweite Ausnehmung können einen Querschnittsdurchmesser im Bereich von Millimetern oder Mikrometern aufweisen. Dabei kann der Querschnitt der ersten Ausnehmung ein Aspektverhältnis, d.h. bei einem rechteckigem Querschnitt ein Verhältnis von Höhe zu Breite von größer 1 aufweisen. Dies ergibt einen kompakten Aufbau in Mikroform und die Ventile lassen sich leicht auf gebräuchlichen Chip-Karten unterbringen. Das Aspektverhältnis größer 1 sorgt für einen zuverlässigen Verschluss des Ventils bei Druck auf die Elastomermasse, da die Elastomermasse dadurch keine große Verformung aufweisen muss, um den Durchflusskanal zu verschließen. Je größer das Aspektverhältnis ist, desto einfacher und mit desto weniger Druck kann das Ventil geschlossen werden. Eine geringe Verformung der Elastomermasse in die erste Aussparung hinein reicht dann aus, das Ventil zu schließen.

Der Durchflusskanal kann in dem einen Teilbereich der ersten Aussparung eine Vertiefung aufweisen. Dadurch kann bei einer Verengung des Durchflusskanals an diesem Teilbereich durch die Elastomermasse des Ventils im offenen Zustand, was zu einem einfacheren Schließen bei Betätigung des Ventils führt, die Querschnittsfläche des Durchflusskanals gleich der in einem Bereich außerhalb des Teilbereichs des Ventils gehalten werden. So bleibt die Strömungsgeschwindigkeit im Bereich des Ventils, bei geöffnetem Ventil, gleich der im Rest des Durchflusskanals, unter der Annahme einer einheitlichen Durchflusskanalbreite und Höhe im Trägerkörper. Es entsteht für die Flüssigkeit im Kanal kein Engpass an der Stelle des Ventils.

Die zweite Ausnehmung kann die Form eines Zylinders mit Krempe aufweisen, wobei am Außenumfang der Krempe eine Krempenerhöhung ausgebildet ist. Bei dieser speziellen Form der zweiten, mit Elastomermasse gefüllten Ausnehmung, ist die Elastomermasse gut bzw. stabil im Trägerkörper verankert. Bei Betätigung des Ventils durch Druck auf die Elastomermasse wird die Elastomermasse nicht einfach aus dem Trägerkörper herausgedrückt. Es entsteht ein besonders stabiles Ventil.

Bei dem Verfahren zum Betätigen eines zuvor beschriebenen Ventils wird eine Druckkraft auf die Elastomermasse ausgeübt. Die Elastomermasse wird verformt und durch die Verformung entlang des Querschnitts des Durchflusskanals wird wenigstens die erste Aussparung insbesondere vollständig ausgefüllt. Dadurch wird der Durchflusskanal flüssigkeitsdicht und/oder gasdicht verschlossen. Bei fehlender Druckkraft kehrt die Elastomermasse im Wesentlichen in ihre Ursprungsform zurück, wobei der Durchflusskanal geöffnet wird. Die Druckkraft kann mit Hilfe eines Stempels ausgeübt werden. Dies gibt einen einfachen Aufbau und eine besonders einfache Möglichkeit, die Druckkraft auf die Elastomermasse auszuüben. Der Stempel kann sich in einer externen Einheit befinden, in welcher auch die Ausleseeinheit für einen Sensor-Chip angeordnet sein kann. Die Mechanik zum Auslösen des Stempels und der Stempel selbst sind somit getrennt von dem Trägerkörper und können bei einem Wegwerfartikel Trägerkörper mit Ventilen bei mehreren Untersuchungen wiederverwendet werden.

Ist der Trägerkörper mit seinen Ausnehmungen und somit das Ventil durch eine Folie abgedichtet, so kann die Druckkraft indirekt über die Folie auf die Elastomermasse übertragen werden.

Der Trägerkörper kann durch flächiges Einspannen von zwei sich gegenüberliegenden Seiten her befestigt werden. Dabei wird die Druckkraft auf die Elastomermasse von der Seite her ausgeübt, welche der Seite der ersten und der zweiten Aussparung gegenüberliegt. Dadurch wird ein festes Einspannen des Trägerkörpers mit Ventilen z.B. in einer Ausleseeinheit ermöglicht, welche ohne Verrutschen des Trägerkörpers zuverlässig die Ventile bedienen kann, und so die chemischen und fluidischen Prozesse im Trägerkörper steuern kann.

Die Druckkraft kann auf die Elastomermasse in einer ersten Richtung, welche bevorzugt im Wesentlichen senkrecht zur Rückseite des Trägerkörpers ist, ausgeübt werden. Die Elastomermasse kann sich im Wesentlichen entlang einer zweiten Richtung entlang des Querschnitts des Durchflusskanals verformen. Die zweite Richtung ist bevorzugt im Wesentlichen senkrecht zur ersten Richtung und insbesondere im Wesentlichen parallel zur Rückseite des Trägerkörpers. Im Wesentlichen senkrecht bedeutet, dass beide Richtungen einen Winkel von 90° einschließen, wobei auch Winkel von 90° plus/minus 10° auftreten können. Es sind auch andere Winkel als 90° plus/minus 10° möglich, wobei wesentlich ist, dass beide Richtungen nicht parallel sind und somit der Winkel nicht gleich 0° ist.

Die Verformung der Elastomermasse ist eine Folge der Druckkraft. Durch einen Winkel zwischen der Richtung der Druckkraft und der Richtung der Verformung kann eine bessere Funktionsweise des Ventils gewährleistet werden. Ein Aufbau des Ventils, welcher ein Herausdrücken der Elastomermasse aus dem Trägerkörper bei Druckeinwirkung verhindert, ist so leicht möglich. Weiterhin wird insbesondere bei einer Klebeschicht auf der Vorderseite des Trägerkörpers in Kontakt mit der Elastomermasse der Effekt minimiert, bei welchem die Klebeschicht zu einer nicht vollständig reversiblen Verformung der Elastomermasse führt. Die Elastomermasse klebt an der Klebeschicht und dies führt bei Aufhebung der Druckkraft dazu, dass die Elastomermasse nicht vollständig in ihre Ursprungsform zurückkehrt und die erste Aussparung des Durchflusskanals nicht wieder vollständig freigibt, d.h. das Ventil nicht vollständig öffnet. Durch einen Winkel von 90° zwischen der Richtung der Druckkraft und der Richtung der Verformung sowie einem großen Aspektverhältnis der ersten Aussparung des Durchflusskanals, wobei nur eine kleine gemeinsame Grenzfläche zwischen Klebeschicht und erster Aussparung besteht, ist die Kontaktfläche zwischen der Elastomermasse und der Klebeschicht insbesondere im geschlossenen Zustand des Ventils minimiert. Der Effekt der plastischen Verformung der Elastomermasse durch Kleben an der Klebeschicht wird so minimiert. Der Durchflusskanal bzw. die erste Ausnehmung wird bei Aufhebung der Druckkraft auf die Elastomermasse fast vollständig freigegeben und das Ventil gut geöffnet.

Eine einfache und billige Herstellungsmethode des Trägerkörpers ist gegeben, wenn dieser mit der ersten und der zweiten Ausnehmung durch Spritzgusstechnik erzeugt wird. Dies ermöglicht eine schnelle Massenproduktion, bei der der Trägerkörper und die Ausnehmungen gleichzeitig hergestellt werden, in einem Schritt. Dabei kann in die zweite Ausnehmung die Elastomermasse durch Spritzgusstechnik eingebracht werden. Die erste und die zweite Ausnehmung können durch Aufbringen einer selbstklebenden Folie flüssigkeitsdicht abgedeckt werden.

Die mit dem Verfahren zum Betätigen eines Ventils und mit dem Verfahren zur Herstellung eines Ventils verbundenen Vorteile sind analog den Vorteilen, welche zuvor im Bezug auf das Ventil beschrieben wurden.

Bevorzugte Ausführungsformen der Erfindung mit vorteilhaften Weiterbildungen gemäß den Merkmalen der abhängigen Ansprüche werden nachfolgend anhand der Figuren näher erläutert, ohne jedoch darauf beschränkt zu sein.

Es wird in den Figuren dargestellt:
- Fig. 1: eine schematische Schnittdarstellung des Aufbaus eines Ventils, und
- Fig. 2: das in Fig. 1 gezeigte Ventil im offenen Zustand I und im geschlossenen Zustand II, und
- Fig. 3: der spezielle Aufbau des erfindungsgemäßen Ventils in Aufsicht und in Schnittdarstellung entlang der Schnittlinie A-A' und entlang der Schnittlinie B-B'.

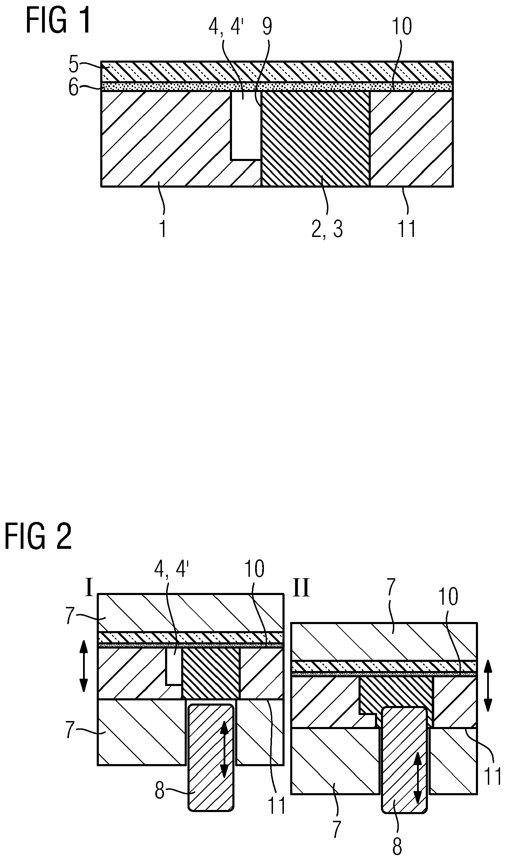

Das in der Fig. 1 gezeigte Ventil ist aus einem Substrat- oder Trägerkörper 1 und einer Elastomermasse 2 aufgebaut. Der Trägerkörper 1 kann die Form einer Chip-Karte aufweisen, wobei auf dem eingebetteten Chip ein elektrochemisches Sensor-Array zum Nachweis biochemischer Substanzen angeordnet sein kann. Der Einfachheit halber soll hier auf die Ausgestaltung der Chip-Karte nicht näher eingegangen werden.

In dem Trägerkörper 1 ist eine erste Aussparung 4 ausgebildet. Die erste Aussparung 4 ist zu einer Vorderseite 10 des Trägerkörpers 1 hin offen. Sie weist die Form eines Kanals auf und dient als Durchflusskanal 4'. Flüssigkeiten oder Gase können den Durchflusskanal 4' durchströmen. In direkter Nachbarschaft zu der ersten Aussparung 4, an den Durchflusskanal angrenzend, ist eine zweite Aussparung 3 ausgebildet. Diese weist mit der ersten Aussparung 4, in einem Teilbereich 9 der ersten Aussparung 4, eine gemeinsame Grenzfläche aus. Die zweite Aussparung 3 ist, wie in Fig. 1 gezeigt, durchgängig von der Vorderseite 10 bis hin zur Rückseite 11 des Trägerkörpers 1 ausgebildet. Sie ist vollständig mit der Elastomermasse 2 gefüllt bzw. befüllt.

Auf der Vorderseite 10 des Trägerkörpers 1 ist flächig eine selbstlebende Folie 5 aufgebracht. Die Klebeschicht 6 der selbstlebenden Folie 5 sorgt für eine gute Haftung der Folie 5 auf dem Trägerkörper 1 und auf der Elastomermasse 2. Die Folie 5 mit ihrer Klebeschicht 6, in Verbindung mit dem Trägerkörper 1 und der Elastomermasse 2, dichtet den Durchflusskanal 4' luft- bzw. gasdicht und/oder flüssigkeitsdicht gegenüber der Umwelt ab.

In Fig. 2 ist der in Fig. 1 gezeigte Trägerkörper 1 sandwichartig in einer Ausleseeinheit 7 befestigt. Teile der Ausleseeinheit 7 sind gegen die Vorderseite 10 und gegen die Rückseite 11 des Trägerkörpers 1 gepresst. Dadurch ist der Trägerkörper 1 unbeweglich in der Ausleseeinheit 7 gelagert. Ist der Trägerkörper 1 in Form einer Chip-Karte ausgestaltet, so kann die Ausleseeinheit 7 Signale des Sensor-Arrays auslesen und verarbeiten. Zur Steuerung von fluidischen Prozessen und chemischen Reaktionen in der ersten Aussparung 4 des Trägerkörpers 1 kann das Ventil durch die Ausleseeinheit 7 betätigt werden. Sind z.B. an unterschiedlichen Stellen im Trägerkörper 1 zwei Ventile angeordnet, welche eine gemeinsame erste Aussparung 4 aufweisen, so kann diese erste Aussparung 4 durch gleichzeitiges betätigen der zwei Ventile flüssigkeitsdicht und/oder gasdicht abgeschlossen werden. Dadurch entsteht ein abgeschlossener Reaktionsraum, in welchem chemische Reaktionen stattfinden können.

Beispielhaft ist in der Fig. 2 ein Ventil in einem Zustand I vor und in einem Zustand II während/nach seiner Betätigung dargestellt. Ein Stempel 8, welcher zum Beispiel in der Ausleseeinheit 7 angeordnet ist und von dieser gesteuert wird, übt eine Druckkraft von der Rückseite 11 her auf die Elastomermasse 2 aus. Dies kann zum einen durch eine Bewegung des Stempels 8 in Richtung der Elastomermasse 2 erfolgen, oder der Stempel 8 ist ortsfest angeordnet und der Trägerkörper 1 mit der Elastomermasse 2 wird in Richtung Stempel 8 bewegt. Die Druckschrift, welche durch den Stempel 8 auf die Elastomermasse 2 ausgeübt wird, bewirkt eine Verformung des Elastomers. Da sich das Elastomer der Elastomermasse 2 nur in Richtung der ersten Aussparung 4 ausdehnen kann, wird dieses in die erste Aussparung 4 gedrückt. Dies erfolgt so lange, bis die erste Aussparung 4 entlang einem Querschnitt der ersten Aussparung 4 vollständig mit Elastomermasse 2 gefüllt ist. Dies wiederum bewirkt, dass das Ventil verschlossen ist.

Wird der Stempel 8 relativ zur Elastomermasse 2 weg bewegt, so wirkt auf die Elastomermasse 2 weniger bis hin zu keiner Druckkraft, wodurch die Elastomermasse 2 in ihre Ursprungsform zurückkehrt. Die Elastomermasse 2 zieht sich aus der ersten Aussparung zurück und gibt diese somit frei. Das Ventil ist wieder geöffnet.

Zum Betätigen mehrerer Ventile können die Stempel 8 einzeln und nacheinander bewegt werden, oder zum gleichzeitigen Betätigen der Ventile können die Stempel 8 auf einer festen Platte fixiert sein und durch Bewegung des Trägerkörpers 1 mit Elastomermasse 2 kann eine gleichzeitige Betätigung erfolgen.

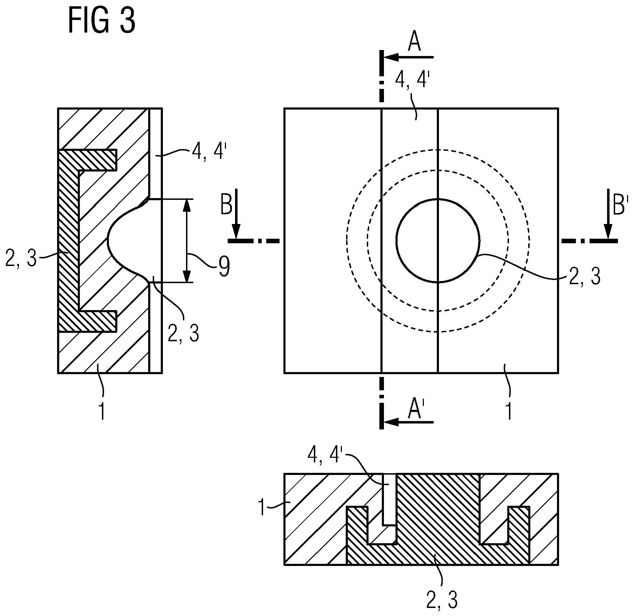

In Fig. 3 ist das erfindungsgemäße Ventil in Aufsicht und als Schnittdarstellung entlang der Linie A-A' und der Linie B-B' dargestellt. Die zweite Aussparung 3, welche mit Elastomermasse 2 befüllt ist, weist die Form eines Zylinders mit Krempe auf, wobei am Außenumfang der Krempe eine Krempenerhöhung ausgebildet ist. Der Durchflusskanal bzw. die erste Aussparung 4 sind schematisch in Form einer rechteckigen Vertiefung in der Oberfläche der Vorderseite 10 dargestellt. In Fig. 3 ist nur der Ausschnitt des Trägerkörpers 1 gezeigt, in welchem ein Ventil ausgebildet ist. In einer Chip-Karte können eine Reihe solcher Ventile und unterschiedliche Durchflusskanäle 4' angeordnet sein, wobei ein Durchflusskanal 4' sich über weite Bereiche des Trägerkörpers 1 erstrecken kann und unterschiedliche Formen aufweisen kann.

Die spezielle Form der mit Elastomermasse 2 gefüllten zweiten Aussparung 3 ergibt eine gute Verankerung und guten Halt auch unter Druckeinwirkung auf die Elastomermasse 2 im Trägerkörper 1. Bei Betätigung des Ventils kann dadurch die Elastomermasse 2 nicht leicht aus dem Trägerkörper 1 gedrückt werden. Sie ist auch bei mehrmaligem Gebrauch des Ventils stabil im Trägerkörper 1 angeordnet. Insbesondere der in Form einer Krempe ausgebildete Teilt der zweiten Aussparung 3, welcher mit seiner Erhöhung von der Rückseite 11 in den Trägerkörper 1 ragt, verleiht der Elastomermasse 2 Halt und Stabilität. Bei Ausübung einer Druckkraft mit Hilfe eines Stempels 8 von der Rückseite 11 her, kann die Elastomermasse 2 nicht auf der Vorderseite 10 aus dem Trägerkörper 1 gedrückt werden.

Wie in der Aufsicht zu sehen ist, ragt die zylinderförmige zweite Aussparung 3 mit der Elastomermasse 2 zu einer Hälfte ihres Durchmessers in den Durchflusskanal 4' hinein. Der Durchmesser des Durchflusskanals 4' ist somit in dem Teilbereich 9, in welchem die Elastomermasse 2 angeordnet ist, verengt. Bei Ausübung einer Druckkraft und somit der Betätigung des Ventils muss die Elastomermasse 2 sich nur geringfügig in die erste Aussparung 4 ausdehnen, um den Durchflusskanal 4' vollständig zu verschließen. Somit ist zum Betätigen des Ventils eine geringere Druckkraft notwendig, als wenn die Elastomermasse 2 im entspannten Zustand vollständig außerhalb des Durchflusskanals 4' angeordnet wäre.

Durch die Verengung des Durchflusskanals 4' im Bereich der Elastomermasse 2 würde an dieser Stelle sich eine Flüssigkeit oder ein Gas stauen beziehungsweise dessen Fließgeschwindigkeit an dieser Stelle stark zunehmen. Um dies zu verhindern ist, wie in der Schnittdarstellung entlang der Linie A-A' dargestellt, eine Vertiefung des Durchflusskanals 4' von der Vorderseite 10 her betrachtet im Trägerkörper 1 ausgebildet. Durch die Vertiefung ist die Querschnittsfläche des Durchflusskanals 4' im Bereich des Ventils überall gleich, wodurch eine Stauung oder die Zunahme der Fließgeschwindigkeit einer Flüssigkeit oder eines Gases im Bereich der Elastomermasse 2 bzw. der zweiten Aussparung 3 verhindert werden kann.

Um das erfindungsgemäße Ventil in biochemischen Vorrichtungen verwenden zu können, müssen die Materialien, welche mit den Flüssigkeiten oder Gasen in Kontakt kommen, mit den zu untersuchenden Substanzen kompatibel sein. In biochemischen Untersuchungen verwendete Flüssigkeiten sind zum Beispiel Blut, Urin, Wasser, Alkohole oder andere Lösungsmittel. Substanzen, welche zum Beispiel durch biochemische Vorrichtungen analysiert oder nachgewiesen werden sollen, sind zum Beispiel Proteine, DNA oder Antikörper. Diese dürfen durch die verwendeten Materialien nicht beeinflusst beziehungsweise verändert werden.

Mögliche zu verwendende Materialien für den Trägerkörper 1 sind harte Polymere, welche aus Gründen der einfachen Herstellung spritzgusstechnisch verarbeitbar sein sollten. Das Material sollte plastisch, d.h. schwer bis nicht verformbar sein. Solche Stoffe sind z.B. durch Polycarbonat oder Polypropylen gegeben. In einer vorgefertigten Form würde der Trägerkörper 1 einer Chip-Karte mit seiner ersten 4 und zweiten Aussparung 3 in einem Arbeitsschritt durch Spritzgusstechnik hergestellt. In die zweite Aussparung würde in einem zweiten Arbeitsschritt durch Spritzgusstechnik die Elastomermasse 2 eingebracht. Als mögliche Materialien für die Elastomermasse 2 eignen sich besonders thermoplastische Elastomere. Ein Beispiel für ein besonders gut geeignetes thermoplastisches Elastomer ist ein Gemisch aus Polypropylen und Ethylen-Propylen-Dien-M-Klass-Elastomer, welches unter dem Markennamen Santoprene® bekannt ist.

Ein Chip mit einem Sensor-Array kann in den Trägerkörper 1 von der Rückseite 11 her eingesetzt werden, welcher über eine Ausleseeinheit 7 von der Rückseite her kontaktiert und ausgelesen werden kann. Die Vorderseite des Trägerkörper 1, auf welcher die Durchflusskanäle 4' und Reaktionskammern angeordnet sind, kann mit Hilfe einer selbstlebenden Folie vollständig steril abgedeckt werden. Dadurch ergeben sich gas- und flüssigkeitsdichte Durchflusskanäle 4' und Reaktionskammer. Ein mögliches Material für eine Folie ist Polyethylen. Es sind aber auch andere Folienmaterialien verwendbar.

## Patentansprüche

1. Ventil zum Öffnen und Schließen eines Durchffusskanals (4') in einem Lab-ona-Chip-System mit einem Trägerkörper (1), welcher wenigstens eine erste Aussparung (4) in Form eines Durchflusskanals (4') aufweist und direkt benachbart zu einem Teilbereich (9) der ersten Aussparung (4) eine zweite Aussparung (3) aufweist,
wobei die zweite Aussparung (3) mit einer Elastomermasse (2) zumindest teilweise befüllt ist,
wobei in einem ersten Zustand die Elastomermasse (2) und der Trägerkörper (1) in dem einen Teilbereich (9) der ersten Aussparung (4) gemeinsam Begrenzungsflächen des Durchflusskanals (4') ausbilden und
wobei in einem zweiten Zustand unter Druckeinwirkung die Elastomermasse (2) derart verformt ist, dass in der ersten Aussparung (4) ein Querschnitt des Durchflusskanals (4') vollständig ausgefüllt ist, so dass der Durchflusskanal (4') verschlossen ist,
**dadurch gekennzeichnet,**
**dass** die zweite Ausnehmung (3) die Form eines Zylinders mit Krempe aufweist, wobei am Außenumfang der Krempe eine Krempenerhöhung ausgebildet ist, so dass die Elastomermasse (2) gut bzw. stabil im Trägerkörper (1) verankert ist.

2. Ventil nach Anspruch 1, **dadurch gekennzeichnet, dass** der Trägerkörper (1) aus Polycarbonat oder Polypropylen besteht und/oder die Elastomermasse (2) aus einem thermoplastischen Elastomer, insbesondere Gummi oder einem Gemisch aus Polypropylen und Ethylen-Propylen-Dien-M-Klass-Elasomer gebildet ist.

3. Ventil nach einem der vorhergehenden Ansprüche, **dadurch gekennzeichnet, dass** die erste (4) und zweite Aussparung (3) mit Hilfe einer Folie (5), insbesondere einer selbstklebenden Folie, flüssigkeitsdicht und/oder gasdicht abgedeckt sind.

4. Ventil nach einem der vorhergehenden Ansprüche, **dadurch gekennzeichnet, dass** der Trägerkörper (1) in Form einer flachen Chip-Karte ausgebildet ist.

5. Ventil nach Anspruch 4, **dadurch gekennzeichnet, dass** die Chip-Karte auf einer Vorderseite (10) die erste (4) und zweite Aussparung (3), welche zur Vorderseite (10) hin offen sind, aufweist und auf dieser Vorderseite (10) vollständig flüssigkeitsdicht und/oder gasdicht mit einer Folie (5), insbesondere einer selbstklebenden Folie, bedeckt ist.

6. Ventil nach einem der vorhergehenden Ansprüche, **dadurch gekennzeichnet, dass** die erste (4) und/oder zweite Ausnehmung (3) einen Querschnittsdurchmesser im Bereich von Millimetern oder Mikrometern aufweist und/oder der Querschnitt der ersten Ausnehmung (4) ein Aspektverhältnis von größer 1 aufweist.

7. Ventil nach einem der vorhergehenden Ansprüche, **dadurch gekennzeichnet, dass** der Durchflusskanal (4') in dem einen Teilbereich (9) der ersten Aussparung (4) eine Vertiefung aufweist.

## Claims

1. Valve for opening and closing a flow channel (4') in a Lab-on-a-Chip-System, comprising a support body (1) which has at least one first recess (4) in the form of a flow channel (4') and has a second recess (3) directly next to a subregion (9) of the first recess (4),
wherein the second recess (3) is at least partially filled with an elastomer compound (2),
wherein in a first state the elastomer compound (2) and the support body (1) form together boundary surfaces of the flow channel (4') in the subregion (9) of the first recess (4), and
wherein in a second state the elastomer compound (2) is deformed under the effect of pressure in such a way that a cross section of the flow channel (4') in the first recess (4) is fully filled, so that the flow channel (4') is closed,
**characterized in**
**that** the second recess (3) has the shape of a cylinder with rim, wherein a rim elevation is formed on the outer circumference of the rim, so that the elastomer compound (2) is anchored well or stably in the support body (1).

2. Valve according to claim 1, **characterized in that** the support body (1) consists of polycarbonate or polypropylene and/or the elastomer compound (2) is formed of a thermoplastic elastomer, in particular rubber or a mixture of polypropylene and ethylene-propylene-diene-M-class-elastomer.

3. Valve according to any one of the preceding claims, **characterized in that** the first recess (4) and the second recess (3) are covered in a liquid-tight and/or gas-tight manner by means of a film (5), in particular a self-adhesive film.

4. Valve according to any one of the preceding claims, **characterized in that** the support body (1) is configured in the form of a flat chip card.

5. Valve according to claim 4, **characterized in that** the chip card comprises the first recess (4) and the second recess(3) on a front side (10), these being open toward the front side (10), and is fully covered in a liquid-tight and/or gas-tight fashion on this front side (10) with a film (5), in particular a self-adhesive film.

6. Valve according to any in one of the preceding claims, **characterized in that** the first recess (4) and/or the second recess (3) have a cross-sectional diameter in the range of millimeters or micrometers and/or the cross section of the first recess (4) has an aspect ratio of more than 1.

7. Valve according to any one of the preceding claims, **characterized in that** the flow channel (4') has an indentation in the one subregion (9) of the first recess (4).

## Revendications

1. Vanne pour ouvrir et fermer un canal d'écoulement (4') dans un système de laboratoire sur puce comportant un corps support (1) présentant au moins un premier évidement (4) en forme de canal d'écoulement (4') et un deuxième évidement (3) directement voisin d'une zone partielle (9) du premier évidement (4),
le deuxième évidement (3) étant rempli, du moins en partie, d'une masse élastomère (2),
la masse élastomère (2) et le corps support (1), dans un premier état, formant ensemble, dans une zone partielle (9) du premier évidement (4), des zones de limitation du canal d'écoulement (4'), et,
dans un deuxième état, sous l'action de la pression, la masse élastomère (2) étant déformée de manière à remplir entièrement, dans le premier évidement (4), une section du canal d'écoulement (4') de sorte que le canal d'écoulement (4') est obturé,
**caractérisée en ce que**
le deuxième évidement (3) a la forme d'un cylindre avec un rebord, un rehaussement étant aménagé sur la circonférence extérieure du rebord de manière à ancrer correctement ou de manière stable la masse élastomère (2) dans le corps support (1).

2. Vanne selon la revendication 1, **caractérisé en ce que** le corps support (1) est constitué de polycarbonate ou de polypropylène et/ou la masse élastomère (2) est formée d'un élastomère thermoplastique, en particulier du caoutchouc ou d'un mélange de polypropylène et d'élastomère éthylène-propylène-diène (classe M).

3. Vanne selon l'une quelconque des revendications précédentes, **caractérisée en ce que** le premier (4) et le deuxième évidement (3) sont recouverts de façon étanche aux liquides et/ou aux gaz à l'aide d'un film (5), en particulier d'un film autocollant.

4. Vanne selon l'une quelconque des revendications précédentes, **caractérisée en ce que** le corps support (1) est en forme de carte à puce plate.

5. Vanne selon la revendication 4, **caractérisée en ce que** la carte à puce présente, sur une côté avant (10), le premier (4) et le deuxième évidement (3) ouverts vers le côté avant (10) et est recouvert, sur ce côté avant (10), d'un film (5), en particulier d'un film autocollant, de manière entièrement étanche aux liquides et/ou aux gaz.

6. Vanne selon l'une quelconque des revendications précédentes, **caractérisée en ce que** le premier (4) et/ou deuxième évidement (3) a un diamètre de section de quelques millimètres ou micromètres et/ou la section du premier évidement (4) un rapport d'aspect supérieur à 1.

7. Vanne selon l'une quelconque des revendications précédentes, **caractérisée en ce que** le canal d'écoulement (4') présente un creux dans une zone partielle (9) du premier évidement (4).
